(19) Europäisches Patentamt
European Patent Office
Office européen des brevets

(11) Publication number: 0 131 445 A2

# (12) EUROPEAN PATENT APPLICATION

(21) Application number: 84304621.0

(22) Date of filing: 05.07.84

(51) Int. Cl.[4]: C 08 L 71/04
C 08 L 77/10

(30) Priority: 06.07.83 JP 122594/83

(43) Date of publication of application: 16.01.85 Bulletin 85/3

(84) Designated Contracting States: DE FR GB NL

(71) Applicant: MITSUBISHI GAS CHEMICAL COMPANY, INC.
5-2, Marunouchi 2-chome Chiyoda-Ku
Tokyo(JP)

(72) Inventor: Sugio, Akitoshi c/o Mitsubishi Gas Kagaku K.K.
Honsha Kenkyusho 1-1 Niijyuku 6-chome
Katsushika-ku Tokyo(JP)

(72) Inventor: Okabe, Masao c/o Mitsubishi Gas Kagaku K.K.
Honsha Kenkyusho 1-1 Niijyuku 6-chome
Katsushika-ku Tokyo(JP)

(72) Inventor: Amagai, Akikazu c/o Mitsubishi Gas Kagaku K.K.
Honsha Kenkyusho 1-1 Niijyuku 6-chome
Katsushika-ku Tokyo(JP)

(74) Representative: Myerscough, Philip Boyd et al,
J.A.Kemp & Co. 14, South Square Gray's Inn
London, WC1R 5EU(GB)

## (54) Polyphenylene ether resin composition.

(57) A polyphenylene ether resin composition comprising
(A) a polyphenylene ether resin, and
(B) an aromatic polyamide having a melting point of up to 330°C composed mainly of at least one kind of recurring structural units containing an aromatic nucleus represented for formula (I)

$$-(R^1-NHCO)- \quad ....(I)$$

wherein $R^1$ represents an alkylenephenylene or dialkylenephenylene group, or formula (II)

$$-(R^2-NHCO-R^3-CONH)- \quad ....(II)$$

wherein $R^2$ represents a phenylene, dialkylenephenylene or biphenylene group or a group of the following formula

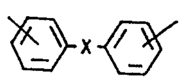

in which X represents an alkylene group having 1 to 5 carbon atoms, an oxygen atom, a sulfur atom, a carbonyl group or a sulfonyl group, and $R^3$ represents an alkylene group having 3 to 10 carbon atoms, a phenylene group or a naphthylene group.

EP 0 131 445 A2

# POLYPHENYLENE ETHER RESIN COMPOSITION

This invention relates to a polyphenylene ether resin composition having excellent mechanical strength, moldability and solvent resistance. More specifically, it relates to a novel polyphenylene ether resin composition comprising (a) a polyphenylene ether resin and (b) a polyamide resin having an aromatic nucleus in the main chain.

Polyphenylene ethers have superior heat resistance, rigidity and electrical properties and are useful as engineering plastics. It is well known however that the polyphenylene ethers have the defect of possessing inferior solvent resistance and oil resistance and poor moldability.

Various proposals have been made in the past in an attempt to remedy these defects of the polyphenylene ethers.

U. S. Patent No. 3,383,435 discloses a polyphenylene ether resin composition having improved moldability attributed to the incorporation of polystyrene resin.

U. S. Patent No. 3,379,792 and the corresponding Japanese Patent Publication No. 997/1970 discloses the preparation of a polyphenylene ether resin composition having improved moldability and flow characteristics by adding an aliphatic polyamide to polyphenylene ether. These patent documents state however that the tensile properties of the composition are reduced with an increase in the amount of the polyamide added, and when its amount is 20% or more, the composition loses various properties and becomes unsuitable for many applications.

U. S. Patent No. 4,338,421 discloses a method of producing a resin composition by melt-kneading 70 to 5%

by weight of polyphenylene ether and 30 to 95% by weight of a polyamide. The U. S. Patent states that a resin composition having excellent solvent resistance and impact strength can be obtained by melt-kneading polyphenylene ether with at least 30% by weight of an aliphatic polyamide such as 4-nylon, 6-nylon, 6,6-nylon, 12-nylon and 6,10-nylon. It is apparent in the light of the disclosures of the above-cited U. S. Patent No. 3,379,792 and Japanese Patent Publication No. 997/1970 that this resin composition, too, is obtained at the sacrifice of the deterioration of its tensile properties.

It is an object of this invention to provide a novel polyphenylene ether resin composition.

Another object of this invention is to provide a polyphenylene ether resin composition having improved mechanical strength properties including tensile properties, solvent resistance and moldability in a well-balanced combination.

Still another object of this invention is to provide a polyphenylene ether resin composition having excellent tensile properties in spite of including a polyamide resin.

Other objects and advantages of this invention will become apparent from the following description.

According to this invention, these objects and advantages are achieved by a polyphenylene ether resin composition comprising

(A) a polyphenylene ether resin, and

(B) an aromatic polyamide having a melting point of up to about 330°C composed mainly of at least one kind of recurring structural units containing an aromatic nucleus represented by the following formula (I)

$$-(R^1-NHCO)- \qquad \text{..... (I)}$$

wherein $R^1$ represents an alkylenephenylene or

dialkylenephenylene group, and the following formula (II)

$$-\!\!\left(R^2\text{-NHCO-}R^3\text{-CONH}\right)\!\!- \quad ..... \text{ (II)}$$

wherein $R^2$ represents a phenylene, dialkylenephenylene or biphenylene group or a group of the following formula

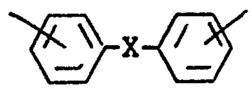

in which X represents an alkylene group having 1 to 5 carbon atoms, an oxygen atom, a sulfur atom, a carbonyl group or a sulfonyl group, and $R^3$ represents an alkylene group having 3 to 10 carbon atoms, a phenylene group or a naphthylene group.

The polyphenylene ether resin (A) constituting the resin composition of this invention denotes a polyphenylene ether resin and a blend of a polyphenylene ether resin with another resin and/or an elastomer. The polyphenylene ether resin herein means a homo- or co-polymer of polyphenylene ether, and a graft polymer obtained by grafting an aromatic vinyl compound to such a homo- or co-polymer.

Preferably, the homopolymer or copolymer of polyphenylene ether is obtained by oxidatively polycondensing a monocyclic phenol represented by the following formula

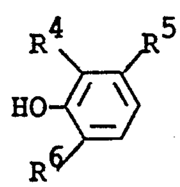

..... (III)

wherein $R^4$ represents a lower alkyl group having 1 to 3 carbon atoms, and $R^5$ and $R^6$, independently from each other, represent a hydrogen atom or an alkyl group having 1 to 3 carbon atoms.

The homopolymer can be obtained from a single monocyclic phenol, and the copolymer, from two or more monocyclic phenols.

The alkyl group having 1 to 3 carbon atoms in general formuyla (III) denotes methyl, ethyl, n-propyl and iso-propyl groups.

The alkyl group having 1 to 3 carbon atoms in general formula (III) denotes methyl, ethyl, n-propyl and iso-propyl groups.

Examples of the monocyclic phenol of general formula (III) include 2,6-dimethylphenol, 2,6-diethylphenol, 2,6-dipropylphenyl, 2-methyl-6-ethylphenol, 2-methyl-6-propylphenol, 2-ethyl-6-propylphenol, o-cresol, m-cresool, 2,3-dimethylphenol, 2,3-diethylphenol, 2,3-dipropylphenol, 2-methyl-3-ethylphenol, 2-methyl-3-propylphenol, 2-ethyl-3-methylphenol, 2-ethyl-3-propylphenol, 2-propyl-3-methylphenol, 2-propyl-3-ethylphenol, 2,3,6-trimethylphenol, 2,3,6-triethylphenol, 2,3,6-tripropylphenol, 2,6-dimethyl-3-ethylphenol and 2,6-dimethyl-3-propylphenol. Thus, examples of polyphenylene ether resins obtained by polycondensing these monocyclic phenols include homopolymers such as poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether and poly(2-ethyl-6-propyl-1,4-phenylene)-ether, and copolymers such as 2,6-dimethylphenol/2,3,6-trimethylphenol copolymer, 2,6-dimethylphenol/2,3,6-triethylphenol copolymer, 2,6-diethylphenol/2,3,6-trimethylphenol copolymer and 2,6-dipropylphenol/2,3,6-trimethylphenol copolymer.

Of these, poly(2,6-dimethyl-1,4-phenylene)ether and 2,6-dimethylphenol/2,3,6-trimethylphenol copolymer are preferred.

As the aforesaid graft polymer, preferred is a graft polymer obtained by grafting an aromatic vinyl

compound represented by the following formula (IV)

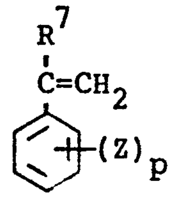 ..... (IV)

wherein $R^7$ represents a hydrogen atom or a lower alkyl group, Z represents a halogen atom or a lower alkyl group, and p is 0 or an integer of 1 to 3,

to the homo- or co-polymer of polyphenylene ether. The graft polymer can be produced, for example, by the method described in Japanese Laid-Open Patent Publication No. 126,800/1975. Examples of the aromatic vinyl compound are styrene, alpha-methylstyrene, vinyltoluene, vinylxylene, ethylstyrene, n-propylstyrene, iso-propylstyrene, chlorostyrene and bromostyrene.

Of these graft polymers, a graft polymer of poly(2,6-dimethyl-1,4-phenylene)ether with styrene and a graft polymer of 2,6-dimethylphenol/2,3,6-trimethylphenol copolymer with styrene are preferred.

Polystyrene-type resins are preferred as the other resin to be blended with the phenylene ether resin. For example, those which contain at least 25% by weight of structural units of the following formula (V)

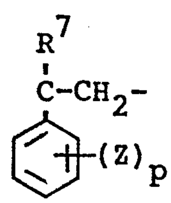 ..... (V)

wherein $R^7$, Z and p are as defined with regard to formula (IV),

are preferred.

The lower alkyl group in general formula (V) is preferably an alkyl group having 1 to 3 carbon atoms, such

as methyl, ethyl, n-propyl and isopropyl.

The halogen atom in general formula (V) is preferably chlorine or bromine.

The structural units of formula (V) are derived from a styrene monomer of the above formula (IV).

Examples of preferred polystyrene-type resins are polystyrene, high-impact polystyrene (rubber-modified polystyrene), styrene/butadiene copolymer, styrene/butadiene/acrylonitrile copolymer, styrene/acrylonitrile copolymer, styrene/maleic anhydride copolymer, styrene/butadiene/maleic anhydride copolymer, styrene/p-methylstyrene copolymer, high impact poly p-methylstyrene, styrene/acrylic rubber, acrylonitrile copolymer, styrene/alpha-methylstyrene copolymer and styrene/butadiene resinous block copolymer. They may be used either singly or in combination.

Polymers having a Young's modulus at room temperature of $10^5$ to $10^9$ dynes/$cm^2$ (0.1 to 1020 kg/$cm^2$) in accordance with the definition given in A. V. Tobolsky, "Properties and Structures of Polymers" (John Wiley & Sons, Inc., 1960), pages 71 to 78 may be used as the elastomer to be blended with the polyphenylene ether polymer.

Examples of such elastomers include A-B-A' type elastomeric block copolymers (wherein A and A' are blocks resulting from polymerization of an aromatic vinyl compound, and B is a block resulting from polymerization of a conjugated diene), A-B'-A' type elastomeric block copolymers (wherein A and A' are the same as above, and B' is a block resulting from hydrogenation of the block B above), polybutadiene, polyisoprene, an elastomeric copolymer of a diene compound and an aromatic vinyl compound, nitrile rubber, ethylene/propylene copolymer, ethylene/propylene/diene copolymer (EPDM), thiokol rubbers, polysulfide rubbers, acrylic rubbers, a grafted product of butyl rubber and polyethylene, polyurethane rubbers, and

polyester elastomers. Of these, the A-B-A' type and A-B'-A' elastomeric block copolymers are preferred, and those in which the molecular weight of the block B or B' is higher than the total sum of the molecular weight of the block A and the molecular weight of the block A' are especially preferred. The block A or A' is, for example, a homo-block or co-block resulting from the polymerization of a monocyclic aromatic vinyl compound such as styrene, alpha-methylstyrene, vinyltoluene, vinylxylene or ethylvinylxylene, or a polycyclic aromatic vinyl compound such as vinylnaphthalene, or a mixture thereof and preferably has a molecular weight of about 2,000 to about 100,000. The block B is, for example, an elastomeric block resulting from the polymerization of a conjugated diene compound such as 1,3-butadiene, 2,3-dimethylbutadiene, isoprene and 1,3-pentadiene. The block B' results from the hydrogenation of the block B. The block B or B' preferably has a molecular weight of about 25,000 to about 1,000,000.

The other resin such as the polystyrene-type resin can be blended in an amount of 5 to 95 parts by weight, preferably 15 to 85 parts by weight, per 100 parts by weight of the polyphenylene ether resin and the other resin combined. The elastomer can be incorporated in an amount of 5 to 98 parts by weight, preferably 15 to 95 parts by weight, per 100 parts by weight of the polyphenylene ether resin and the elastomer combined.

The other component constituting the resin composition of this invention is an aromatic polyamide (B). The aromatic polyamide is composed mainly of at least one kind of recurring structural units containing an aromatic nucleus which are represented by the above formulae (I) and (II) and has a melting point of up to about 330°C.

In formula (I), $R^1$ represents an alkylenephenylene, phenylenealkylene or dialkylenephenylene group. The alkylene moiety in these groups may be linear or

branched and is preferably a lower alkylene group having 1 to 4 carbon atoms.

Preferred alkylenephenylene groups are those represented by the following formula

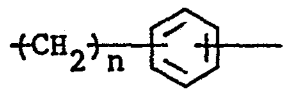

wherein n is an integer of 1 to 4. Those in which the two bonds from the phenylene ring are p-oriented are especially preferred. Examples of such alkylenephenylene groups are methylenephenylene, ethylenephenylene, propylenephenylene and butylenephenylene groups.

Preferred phenylenealkylene groups are those represented by the following formula

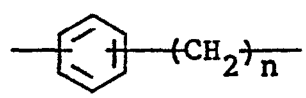

wherein n is as defined. Those in which the two bonds from the phenylene ring are p-oriented are especially preferred. Examples of such phenylenealkylene groups are phenylenemethylene, phenyleneethylene, phenylenepropylene and phenylenebutylene groups.

Preferred dialkylenephenylene groups are those having the following formula

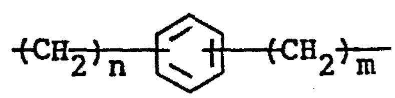

wherein n and m are identical or different and represent an integer of 1 to 4. Those in which the two bonds from the phenylene ring are p-oriented are especially preferred. Examples of such dialkylenephenylene groups are methylenephenylenemethylene, ethylenephenylenemethylene, propylenephenylenemethylene, butylene phenylenemethylene, methylenephenyleneethylene, ethylenephenyleneethylene, propylenephenyleneethylene and butylenephenyleneethylene groups.

In formula (II) above, $R^2$ represents a phenylene, dialkylenephenylene or biphenylene group or a group of the formula

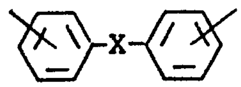

wherein X represents an alkylene group having 1 to 5 carbon atoms, an oxygen atom, a sulfur atom, a carbonyl group or a sulfonyl group. The phenylene group may be a p-phenylene, m-phenylene or o-phenylene group. Of these, m- and p-phenylene groups are preferred. Each of the alkylene moieties in the dialkylenephenylene group may be linear or branched, and is preferably a lower alkylene group having 1 to 4 carbon atoms. Examples of the dialkylenephenylene groups may be the same as those exemplified above with regard to formula (I). Of these, m- and p-methylenephenylenemethylene groups are more preferred, and the m-methylenephenylenemethylene group is especially preferred. Examples of the biphenylene group are 4,4'-biphenylene, 3,3'-biphenylene, 2,2'-biphenylene and 2,4'-biphenylene groups. The 4,4'-biphenylene group is preferred.

Examples of the group of the following formula

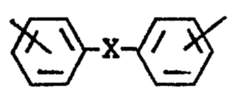

are $\mathrm{ph{-}CH_2{-}ph}$, $\mathrm{ph{-}(CH_2)_2{-}ph}$, $\mathrm{ph{-}\overset{CH_3}{\underset{CH_3}{C}}{-}ph}$, $\mathrm{ph{-}\overset{C_2H_5}{\underset{C_2H_5}{C}}{-}ph}$, ph-O-ph, ph-S-ph, $\mathrm{ph{-}\underset{\underset{O}{\|}}{C}{-}ph}$, and $\mathrm{ph{-}SO_2{-}ph}$ (in which ph represents the phenyl ring).

$R^3$ in formula (II) is an alkylene group having 3 to 10 carbon atoms, a phenylene group or a naphthylene group. The alkylene group having 3 to 10 carbon atoms may be linear or branched, and preferred examples are trimethylene, tetramethylene, pentamethylene, hexamethylene,

heptamethylene, octamethylene, nonamethylene and decamethylene groups. The phenylene group may be p-phenylene, m-phenylene or o-phenylene. The naphthylene group may, for example, be 1,4-naphthylene, 1,5-naphthylene, 2,6-naphthylene or 2,7-naphthylene.

The recurring structural units containing an aromatic nucleus which are represented by formulae (I) and (II) can be formed in a customary manner by the selfcondensation of the corresponding omega-amino-omega'-carboxylic acids or the condensation of the corresponding diamines and dicarboxylic acids.

Examples of the omega-amino-omega'-carboxylic acids include p-aminophenylacetic acid, 3-(p-aminophenyl)-propionic acid, 4-(p-aminophenyl)butyric acid, 4-(p-aminophenyl)valeric acid, p-(2-aminoethyl)benzoic acid, p-aminomethylphenylacetic acid, 3-(p-aminomethylphenyl)propionic acid, 4-(p-aminomethylphenyl)butyric acid, 5-(p-aminomethylphenyl)valeric acid, p-(2-aminoethyl)phenylacetic acid, 3-[p-(2-aminoethyl)phenyl]propionic acid, 4-p-(2-aminoethyl)phenyl]butyric acid and 5-[p-(2-aminoethyl)-phenyl]valeric acid.

Examples of the diamine which gives the structural units of formula (II) include 1,4-diaminobenzene, 1,3-diaminobenzene, 1,2-diaminobenzene, 1,4-diaminomethylbenzene, 1,3-diaminomethylbenzene, 1,4-di(2-aminoethyl)benzene, 4,4'-diaminobiphenyl, 3,3'-diaminobiphenyl, bis(4-aminophenyl)methane, 2,2-bis(4-aminophenyl)propane, 3,3-bis(4-aminophenyl)pentane, di(4-aminophenyl)ether, di(4-aminophenyl)sulfide, (4-aminophenyl)ketone and di(4-aminophenyl)sulfone.

Examples of the dicarboxylic acids which gives the structural units of formula (II) include glutaric acid, adipic acid, pimelic acid, suberic acid, azelaic acid, sebacic acid, nonanedioic acid, decanedioic acid, phthalic acid, isophthalic acid, terephthalic acid, naphthalene-1,4-dicarboxylic acid, naphthalene-1,5-di-

carboxylic acid, naphthalene-2,6-dicarboxylic acid, and naphthalene-2,7-dicarboxylic acid.

Aromatic polyamides composed mainly of the structural units of formula (II), particularly formula (II) in which $R^3$ is an alkylene group having 3 to 10 carbon atoms, are preferred as the aromatic polyamide (B).

The aromatic polyamides used in this invention may be homopolymers or copolymers, but contain at least 50 mole% of the recurring units of formula (I) or (II) based on the entire recurring units. They may include less than 50 mole%, based on the entire recurring units, of structural units other than those of formula (I) or (II), for example structural units derived from a combination of epsilon-caprolactam, an aliphatic amino acid such as epsilon-aminocaproic acid or its functional derivative an aliphatic diamine such as hexamethylenediamine with a dicarboxylic acid.

The aromatic polyamide in accordance with this invention contains preferably at least 60 mole%, more preferably at least 80 mole%, based on the entire structural units, of the structural units of formula (I) or (II). Especially preferably, it consists substantially of the structural units of formula (I) or (II).

The aromatic polyamide used in this invention should have a melting point of up to about 330°C, preferably not more than about 300°C.

Preferably, the aromatic polyamide used in the resin composition of this invention has a number average molecular weight of about 5,000 to about 50,000, especially about 7,000 to about 40,000.

The resin composition of this invention may contain the aromatic polyamide (B) in an amount of about 1 to about 60% by weight, preferably about 1 to about 30% by weight, based on the total amount of the polyphenylene ether polymer (A) and the aromatic polyamide (B).

To prepare the polyphenylene ether resin

composition of this invention, the polyphenylene ether resin and the aromatic polyamide may be mixed by any known methods, for example by using a roll mill, a Bunbury mixer, an extruder, etc.

The inclusion of the aromatic polyamide in the polyphenylene ether resin composition imparts quite unique properties. Specifically, by the inclusion of the aromatic polyamide, the moldability and solvent resistance of the polyphenylene ether resin are improved. Furthermore, its tensile properties is rather improved, and this improvement has been found to increase with increasing amount of the aromatic polyamide added. This effect cannot possibly be anticipated from known polyphenylene ether resin composition containing aliphatic polyamides and is a surprising new discovery which signifies the utiliity of the resin composition of this invention.

As desired, the composition of this invention may include other ingredients, for example other resins, fire retardants, fire retarding aids, stabilizers, ultraviolet absorbers, plasticizers, lubricants, pigments and fillers.

Examples of the other resins include polyamides other than the aforesaid aromatic polyamides, for example nylon-4, nylon-6, nylon-6,6, nylon-12, nylon-6,10, a polymer from terephthalic acid and trimethylhexamethylenediamine, a polymer from adipic acid and 2,2-bis(p-aminocyclohexyl)propane, and a polymer from terephthalic acid and 4,4'-diaminodicyclohexylmethane.

The other resins may be included in an amount of not more than about 70% by weight, preferably not more than about 40% by weight, based on the total amount of the polyphenylene ether resin, the aromatic polyamide and the other resin.

Examples of the fire retardants include phosphoric acid esters such as triphenyl phosphate, tricresyl phosphate, a phosphate obtained from a mixture of

isopropylphenol and phenol, and a phosphate obtained from a difunctional phenol such as benzohydroquinone or bisphenol A, another alcohol or phenol; bromine-type fire-retarding agents typified by decabromobiphenyl, pentabromotoluene, decabromobiphenyl ether, hexabromobenzene and brominated polystyrene; and nitrogen-containing compounds such as cyanuric acid derivatives and melamine derivatives.

Antimony trioxide is preferably used as the fire retarding aid.

Other additives include, for example, stabilizers such as sterically hindered phenols or phosphite compounds; ultraviolet absorbers such as salicylate compounds, benzophenone compounds, benzotriazole compounds, organic nickel compounds, oxalic diamide compounds and sterically hindered amine compounds; lubricants such as polyethylene wax, polypropylene wax and other polyolefin waxes; pigments such as titanium oxide, zinc sulfide and zinc oxide; mineral fillers such as glass fibers, glass beads, asbestos, wollastonite, mica, talc, clay and calcium carbide; inorganic fillers such as aluminum or zinc flakes, or fibers of metals such as brass, aluminum and zinc; and organic fillers typified by carbon fibers.

The following Examples and Comparative Examples illustrate the polyphenylene ether resin compositions more specifically.

Example 1

Eighty parts by weight of 2,6-dimethylphenol/2,3,6-trimethylphenol copolymer (having a 2,3,6-trimethylphenol content of 5 mole%) having an intrinsic viscosity, measured at 25°C in chloroform as a solvent, of 0.55 dl/g, 20 parts by weight of an aromatic polyamide resin (Reny, a trade name for a product of Mitsubishi Gas Chemical Co., Inc.) obtained by polycondensing m-xylenediamine and adipic acid and having a melting point, measured by DSC, of 230°C, 0.6 part by weight of 2,2'-methylenebis(4-methyl-6-tert-butylphenol) and 0.4 part by weight of hydrogenated bisphenol A phosphite resin were mixed and pelletized by a twin-screw extruder. The pellets were injection-molded into test pieces having a thickness of 1/8 inch by means of an injection molding machine. The tensile strength of the molded article was measured.

Furthermore, a test piece was immersed in methyl ethyl ketone for 2 hours and changes in its appearance were observed. Furthermore, the melt flow value of another test piece was measured by a flow tester at 290°C under a load of 60 kg.

The results are shown in Table 1.

Comparative Example 1

Example 1 was repeated except that nylon-6 (a product of Toyo Spinning Co., Ltd. having a DSC melting point of 213°C) was used instead of the aromatic polyamide used in Example 1.

The results are also shown in Table 1.

Comparative Example 2

Example 1 was repeated except that the aromatic polyamide was not used.

Example 2

A resin composition was prepared as in Example 1 from 50 parts of the same 2,6-dimethylphenol/2,3,6-trimethylphenol copolymer as used in Example 1, 50 parts by weight of the same aromatic polyamide as used in Example 1, 0.6 part by weight of 2,2'-methylenebis(4-methyl-6-tert-butylphenol) and 0.4 part by weight of hydrogenated bisphenol A phosphite resin. Test pieces were prepared from the composition, and their tensile strength and solvent resistance were measured, in the same way as in Example 1.

The results are shown in Table 1.

Comparative Example 3

Example 2 was repeated except that the same nylon-6 as used in Comparative Example 1 was used instead

of the aromatic polyamide used in Example 2.

The results are shown in Table 1.

Table 1

| Example (Ex.) or Comparative Example (CEx.) | Proportions (parts by weight) | | | Tensile strength ($kg/cm^2$) | Charge after immersion in methyl ethyl ketone | Melt flow value (cc/sec) |
|---|---|---|---|---|---|---|
| | PPE (*1) | Polyamide | | | | |
| | | A (*2) | B (*3) | | | |
| Ex. 1 | 80 | 20 | - | 620 | No change | $9x10^{-3}$ |
| CEx. 1 | 80 | - | 20 | 450 | No change | $11x10^{-3}$ |
| CEx. 2 | 100 | - | - | 750 | Peeled | $3x10^{-3}$ |
| Ex. 2 | 50 | 50 | - | 710 | No change | - |
| CEx. 3 | 50 | - | 50 | 400 | No change | - |

(*1): Polyphenylene ether resin

(*2): Aromatic polyamide

(*3): Nylon-6

Example 3

Forty parts by weight of poly(2,6-dimethyl-1,4-phenylene)ether having an inherent viscosity, measured in chloroform at 25°C, of 0.52 dl/g, 40 parts by weight of the same aromatic polyamide as used in Example 1, 20 parts by weight of styrene/maleic anhydride copolymer (Dylark, a trade name for a product sold by Sekisui Kagaku Hin Kabushiki Kaisha) having a maleic anhydride content of about 20% by weight and 0.8 part of 2,2'-methylenebis(4-methyl-6-tert-butylphenol) were used, and a test piece was prepared in the same way as in Example 1. The tensile strength of the test piece was measured, and the results are shown in Table 2.

Comparative Example 4

Example 3 was repeated except that the same nylon-6 as used in Comparative Example 1 was used instead of the aromatic polyamide used in Example 3. The results are shown in Table 2.

Example 4

A test piece was prepared, and its tensile strength was measured, in th same way as in Example 1 using 54 parts by weight of the same 2,6-dimethylphenol/2,3,6-trimethylphenol copolymer as used in Example 1, 23 parts by weight of the same aromatic polyamide as used in Example 1, 23 parts by weight of styrene/acrylonitrile copolymer (having a melt flow rate of 20 g/10 min. when measured at 220°C under a load of 10 kg; Sunrex, a trade name for a product of Mitsubishi-Monsanto Chemical Co., Ltd.) and 0.8 part of 2,2'-methylenebis(4-methyl-6-tert-butylphenol).

The results are shown in Table 2.

Comparative Example 5

Example 4 was repeated except that the same nylon-6 as used in Comparative Example 1 was used instead of the aromatic polyamide used in Example 4.

The results are shown in Table 2.

Example 5

A test piece was prepared, and its tensile strength was measured, in the same way as in Example 1 except that 10 parts by weight of hydrogenated polystyrene-polybutadiene-polystyrene type elastomeric block copolymer (Kraton, a trade name for a product of Shell Chemical Co.) was further added.

The results are shown in Table 2.

Comparative Example 6

Example 5 was repeated except that the same nylon-6 as used in Comparative Example 1 was used instead of the aromatic polyamide used in Example 5.

The results are shown in Table 2.

Table 2

| Ex. or CEx. | Proportions (parts by weight) | | | | Tensile strength ($kg/cm^2$) |
|---|---|---|---|---|---|
| | PPE (*1) | Polyamide | | Other component | |
| | | A (*2) | B (*3) | | |
| Ex. 3 | 40 | 40 | - | Styrene-maleic anhydride copolymer 20 | 570 |
| CEx. 4 | 40 | - | 20 | Ditto 20 | 450 |
| Ex. 4 | 54 | 23 | - | Styrene-acrylonitrile copolymer 23 | 550 |
| CEx. 5 | 54 | - | | Ditto 23 | 410 |
| Ex. 5 | 80 | 20 | - | Hydrogenated block copolymer elastomer 10 | 460 |
| CEx. 6 | 80 | - | 50 | Ditto 10 | 380 |

(*1), (*2) and (*3) are the same as the footnote to Table 1.

Example 6

Twenty grams of the same polyphenylene ether as used in Example 1 and 20 g of a polyamide (DSC melting point about 230°C) obtained by condensing 5-(p-aminometyl-phenyl)valeric acid under nitrogen at 265 to 325°C by the method of M. N. Bogdanov [Zhur. Obshchez Khim. 29, 986-9 (1959), C. A. Vol. 54, 1960, 1402h] were kneaded at 280°C for about 5 minutes in a laboratory plastomill.

The resulting kneaded mixture was press-formed at 290°C and 200 $kg/cm^2$ to form a film having a thickness of about 0.08 cm.

The tensile strength of the film was measured, and the results are shown in Table 3.

Example 7

Example 6 was repeated except that 10 g of the polyamide used in Example 1 was used with 10 g of a polyamide (DSC melting point about 260°C) obtained by the method of D. D. Coffman described in J. Polymer Sci., 306 (1947), namely by forming a nylon salt from p-xylenediamine and azelaic acid, and then polymerizing the nylon salt in m-cresol under nitrogen at a temperature of 200 to 290°C.

The tensile strength of the molded article is shown in Table 3.

Example 8

Twenty grams of the same polyphenylene ether as used in Example 6 and 20 g of a polyamide (DSC melting point 290°C) produced by the interfacial polycondensation method of S. E. Smirnova-Zamkova described in Ukr. Khim., Zh. 29, 435-9 (1963) (C. A. Vol. 59, 1967, 5272-C) from bis(p-aminomethylphenyl)methane and azelaic acid dichloride were kneaded at 300°C for 7 minutes in a laboratory plastomill.

The kneaded mixture was press-formed at 310°C and 200 $kg/cm^2$ to form a film.

The film had a good appearance and was relatively tough.

Comparative Example 7

Example 6 was repeated except that the same polyamide as used in Comparative Example 3 was used instead of the polyamide used in Example 6.

The results are shown in Table 3.

Table 3

| Ex. or CEx. | Proportions (parts by weight) | | | Tensile strength ($kg/cm^2$) |
|---|---|---|---|---|
| | PPE (*1) | Polyamide | | |
| | | A (*2) | B (*3) | |
| Ex. 6 | 50 | 50 | - | 505 |
| Ex. 7 | 50 | 50 | - | 530 |
| CEx. 7 | 50 | - | 50 | 317 |

(*1), (*2) and (*3) are the same as in Table 1.

CLAIMS

1. A polyphenylene ether resin composition comprising

(A) a polyphenylene ether resin, and

(B) an aromatic polyamide having a melting point of up to 330°C composed mainly of at least one kind of recurring structural units containing an aromatic nucleus represented by formula (I)

$$-(R^1-NHCO)- \quad \text{..... (I)}$$

wherein $R^1$ represents an alkylenephenylene or dialkylenephenylene group,

or formula (II)

$$-(R^2-NHCO-R^3-CONH)- \quad \text{..... (II)}$$

wherein $R^2$ represents a phenylene, dialkylene-phenylene or biphenylene group or a group of the following formula

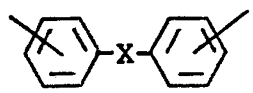

in which X represents an alkylene group having 1 to 5 carbon atoms, an oxygen atom, a sulfur atom, a carbonyl group or a sulfonyl group, and $R^3$ represents an alkylene group having 3 to 10 carbon atoms, a phenylene group or a naphthylene group.

2. A resin composition according to claim 1 wherein the polyphenylene ether resin is a homopolymer of phenylene ether, a copolymer of phenylene ether, a grafted phenylene ether polymer, or a blend of any one of these polymers with another resin or an elastomer.

3. A resin composition according to claim 1 or 2 wherein the other resin is a polystyrene-type resin.

4. A resin composition according to claim 2 wherein the elastomer has a Young's modulus at room temperature of $10^5$ to $10^9$ dynes/cm$^2$.

5. A resin composition according to any one of the

preceding claims wherein the aromatic polyamide contains at least 40 mole%, based on the entire recurring units, of the recurring units of formula (I) or (II).

6. A resin composition according to any one of the preceding claims wherein the aromatic polyamide has a melting point of up to 300°C.

7. A resin composition according to any one of the preceding claims which comprises the aromatic polyamide in an amount of 1 to 60% by weight, based on the total weight of the polyphenylene ether resin (A) and the aromatic polyamide (B).

8. Shaped articles of a resin composition as claimed in any one of the preceding claims.